(19) **Europäisches Patentamt**

**European Patent Office**

**Office européen des brevets**

(11) **EP 1 280 334 B1**

(12) **EUROPEAN PATENT SPECIFICATION**

(45) Date of publication and mention
of the grant of the patent:
**31.08.2005 Bulletin 2005/35**

(51) Int Cl.⁷: **H04N 1/407**

(21) Application number: **02016281.4**

(22) Date of filing: **23.07.2002**

(54) **Image reading apparatus with shading correction and density adjustment**

Bildlesegerät mit Abschattungskorrektur und Bilddichteanpassung

Appareil de lecture d'images avec correction de l'effet d'ombre et de la densité de l'image

(84) Designated Contracting States:
**DE FR GB**

(30) Priority: **23.07.2001 JP 2001221815**

(43) Date of publication of application:
**29.01.2003 Bulletin 2003/05**

(73) Proprietor: **Ricoh Company, Ltd.**
**Tokyo 143-8555 (JP)**

(72) Inventor: **Soeda, Yoshihisa**
**Kawasaki-shi, Kanagawa-ken (JP)**

(74) Representative: **Schwabe - Sandmair - Marx**
**Stuntzstrasse 16**
**81677 München (DE)**

(56) References cited:
**US-A- 4 888 492**      **US-A- 5 371 613**
**US-A1- 2002 003 908**    **US-B1- 6 295 383**

## Description

BACKGROUND OF THE INVENTION:

1.Field of the Invention:

The present invention relates to an image reading apparatus that reads an original image with a CCD line image sensor and outputs image data to a utility instrument, for example, an image forming apparatus, such as a digital copier, a facsimile, etc., after converting to and correcting a digital signal. In particular, the present invention relates to an image reading and forming apparatus capable of correcting the image data in accordance with density adjusting data obtained comparing a density of a reference white plate with that of a reference original even when the density of the reference white plate varies.

2.Discussion of the Background Art:

In a currently spreading digital copier, a CCD sensor reads an image when an optical unit is moved in a sub scanning direction perpendicular to a main scanning direction while an original image receives exposure from a light source, namely, an original surface is read. An analogue image signal is obtained from the original and is then converted to a digital signal. The digital signal is then corrected in various manners. There exists the so-called shading correction that is a process for eliminating unevenness (existing in a widthwise direction of a photo acceptance unit) and make an output from each element of the photo acceptance unit being substantially the same. Such widthwise unevenness is generally caused by one of unevenness of sensitivity of each element in a CCD line image sensor and that of an amount of a transmission light through an imaging lens toward the CCD. Unevenness and degradation of an illumination optical unit also can be a cause thereof.
The shading correction process illuminates a reference white plate 101 (see Fig. 11) arranged in the vicinity of an original document setting and reading section prior to a practical reading of the original, and then reads a reflected light from the reference white plate. The shading correction process then obtains white level reference data to be utilized in a shading correction process for respective pixels. Then, prescribed correction calculation is performed. Specifically, data read from the original is corrected by the correction use data and also receives shading correction.
To precisely perform the shading correction, a density of the reference white plate should be normalized within a standard original reading density range even if there exists density unevenness among reference white plates. Specifically, when unevenness of a density inherently existing in a reference white plate attached to an apparatus or caused by time elapsing is large, image data indicating a density is affected. As a result, a density varies even after the shading process is performed.
To resolve such a problem, the density unevenness of a reference white plate is normalized by setting a different reference potential to the A/D converter, which generally performs A/D conversion based upon a reference potential, during reading a reference white plate area from a reference potential set thereto during reading an original area. Specifically, even if the unevenness exists, outputs after the A/D conversion is aimed to be constant (i.e., adjusted within a standard original reading density range).

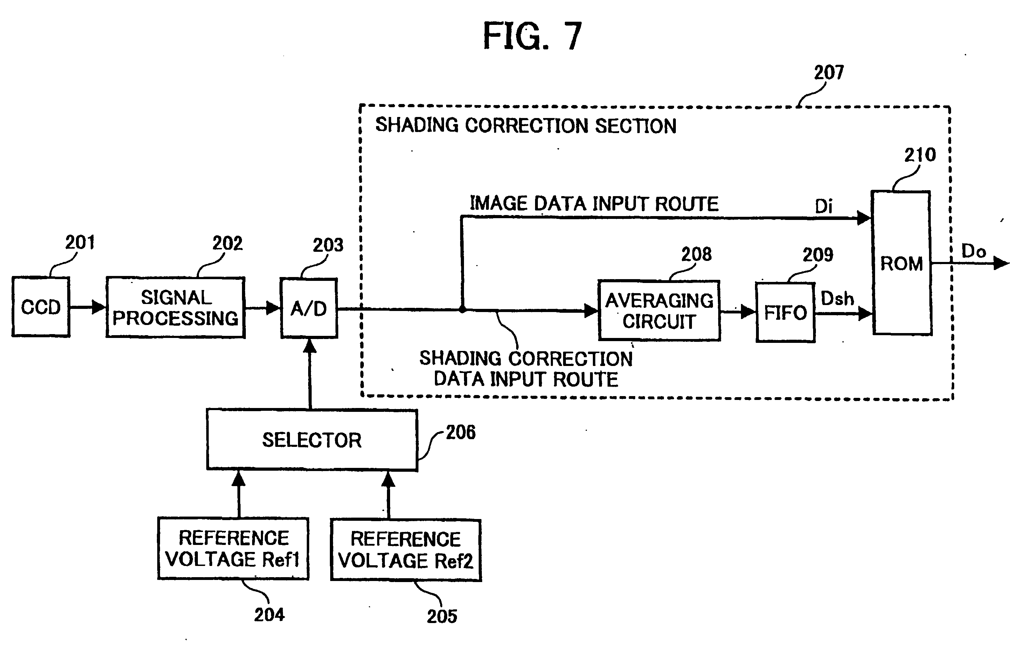

Fig. 7 illustrates an exemplary background circuit employing a system for adjusting density unevenness caused when a conventional reference white plate is utilized. As shown there, an analogue image signal read by a one-dimensional line state CCD 201 is processed by all of wave-fairing, sample holding, and amplifying signal processing circuits 202, and is then converted into digital data by the A/D converter 203. Subsequently, the digital data is input to the shading correction circuit 207.
Different reference voltages Ref1 204 and Ref2 205 are utilized and set to the A/D converter 203 respectively when the reference white plate and an original are read. Specifically, a reference original is utilized so as to define a readable density limit as a standard that is referred to when unevenness existing in a reference white plate is adjusted and its output is normalized. A prescribed reference potential is obtained by adjustment of an adjustment device (not shown) so that an output generated when the density uneven reference white plate is read at the prescribed reference potential substantially equals to that obtained when a reference original is read at Ref1. Then, such a prescribed reference potential is utilized as a reference potential "Ref2" of the A/D conversion when an original is practically read. Thus, different reference potentials Ref1 and Ref2 should be prepared respectively when the reference white plate and original are read, and a selector 206 is required so as to alternately set one of these potentials to the A/D converter 203 when respective reading operations are performed.
However, since different reference potentials and a device for changing and setting one of such potentials are required, a circuit is complex, parts vary, and noise is generated as a problem. In addition, this may lead to higher cost. For example, expensive parts are required when highly precise adjustment is performed.
US 5,371,613 discloses an image reading apparatus.
A standard white plate, a reference patch and a reference copy sheet are read and measured. A ratio of measured values is calculated. The reference patch and the reference copy sheet are on the platen glass.

## SUMMARY OF THE INVENTION:

Accordingly, an object of the present invention is to address and resolve the above-noted and other problems and provide a new image reading apparatus. The above and other object are achieved according to the present invention by providing a novel image reading apparatus including an image sensor for generating an image signal, and an A/D converter for converting the image signal into a digital signal with reference to a reference voltage.

A reference white plate may be provided so as to be read so that shading data can be obtained therefrom and a correction device may be provided so as to correct the digital signal. A reference member may be provided so as to be read and to define a readable density limit. The detection device may be provided so as to detect a ratio, as a density adjustment data, between density values of the reference member and reference white plate when they are read under substantially the same reading condition. A control device may be provided so as to control the correction device to adjust image data or shading data in accordance with the density adjustment data.

In another embodiment, a nonvolatile memory may be provided so as to store the density adjustment data.

In yet another embodiment, an image data correction device may adjust shading data in accordance with the density adjustment data and perform shading correction.

In yet another embodiment, the image data correction device may adjust image data before or after the shading correction in accordance with density adjustment data.

In yet another embodiment, the adjusting device may include a multiplication and division circuit.

In yet another embodiment, the adjusting device may include an addition and subtraction circuit.

In yet another embodiment, a user interface and a detection mode starting device may be provided so as to start a detection mode, wherein the density adjustment data is detected, through an operation of the user interface.

In yet another embodiment, an abnormality determining device may be provided so as to determine abnormality of the reference white plate when density adjustment data is detected as larger than the prescribed value.

In yet another embodiment, a display may be provided so as to display the abnormality on the user interface.

In yet another embodiment, a user interface may allow an operator to alternatively set density adjustment data.

## BRIEF DESCRIPTION OF DRAWINGS

A more complete appreciation of the present invention and many of the attendant advantages thereof will be readily obtained as the same becomes better understood by reference to the following detailed description when considered in connection with the accompanying drawings, wherein:

Fig. 1 is a schematic chart for illustrating the entire configuration of one embodiment of an image reading apparatus according to the present invention;

Fig. 2 illustrates an exemplary configuration of an image signal processing section of the image reading apparatus of Fig. 1;

Fig. 3A shows a configuration of the reference white plate, the exposure glass, and an original;

Fig. 3B is a timing chart for illustrating timings of reading of a reference white plate and original image in a sub scanning direction of the original image;

Fig. 4 is a flowchart for illustrating a detection process started by an instruction from an operator for detecting density adjustment data;

Fig. 5 is a block chart for illustrating a configuration of the other embodiment of an image signal processing section according to the present invention;

Fig. 6 is a schematic chart for illustrating the entire configuration of the other embodiment of the image reading apparatus provided in a DPPC according to the present invention; and

Fig. 7 is a conventional image signal processing section according to the prior art that employs a conventional adjustment system for adjusting density unevenness of a reference white plate.

## DETAILED DESCRIPTION OF THE PREFERRED EMBODIMENT

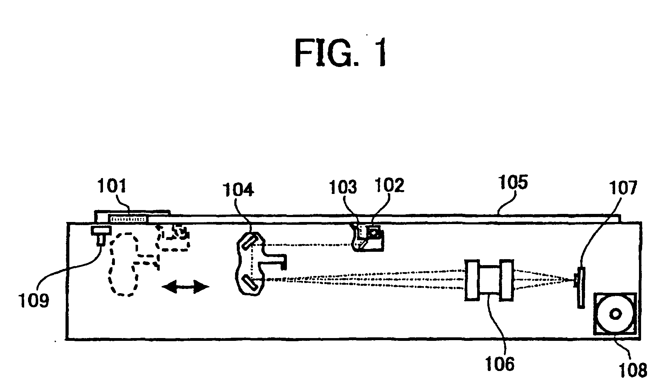

Referring now to the drawings, wherein like reference numerals designate identical or corresponding parts throughout the several views, and in particular in Fig. 1, a schematic configuration and operation of one embodiment of an image reading apparatus is illustrated. The image reading apparatus may include an original setting table 105 made of glass to which an original document (not shown) is set, a lamp 102 for original illumination use, and a first carriage 103 mounting a first mirror for perpendicularly deflecting a light reflected from the original. The image reading apparatus may also include a second carriage 104 mounting second and third mirrors for rectangularity turning a reflection path from the first mirror. Also provided may be a lens unit 106 and a sensor board unit (SBU) 107 mounting a CCD line image sensor for performing photoelectric transfer when an original image transmitted from the second and third mirrors are imaged by the lens unit on the light path.

The CCD sensor may convert the imaged image into an image signal while line sensor elements perform a main scanning in a line direction. Further, the first and second carriage 103 and 104 may be moved by a scanner motor 108 in the sub scanning direction (rightward in Fig. 1) while maintaining a prescribed imaging condition, thereby the entire original surface may be read. The image reading apparatus may read a reference white plate 101 and generate reference data used in a shading correction process or the like beside the original. The reference white plate 101 may be arranged at a prescribed position in relation to the above-described scanning and reading unit so as to be read in substantially the same condition to the original surface. Respective carriages 103 and 104 may be controlled to move by a control section (not shown) that controls the scanning motor 108 to drive based upon a detection signal generated by a scanner home position sensor 109 when the original and reference white plate 101 are read. The image signal read by the CCD line image sensor may then be input to a following image signal processing section including the SBU 107 mounting the CCD. The image signal processing section may perform analogue processing, A/D conversion, and digital signal processing, such as correction, adjustment, etc. Image data processed in such a manner may then be output as an image formation signal to a utility apparatus, such as an optical writing device that writes an image on an image bearer (PC member) when an image forming apparatus is utilized.

Of course, the image sensor can also be a sensor with more than one CCD line. The sensor can also consist of a half tone or a color image sensor arrangement both being well known in principal. As far as semiconductor components are used, all known semiconductor components having the same or comparable characteristics and/or features could be used. E.g. as a nonvolatile memory device, it is possible to use an EPROM, and EEPROM, a ROM and other special components. For example, instead of a number of several components also an ASIC or the like could be used.

Of course, the invention cannot only be incorporated in a copier, but also in a scanner device, a facsimile apparatus or the like, whether they are for the processing of black-and-white and/or color image data.

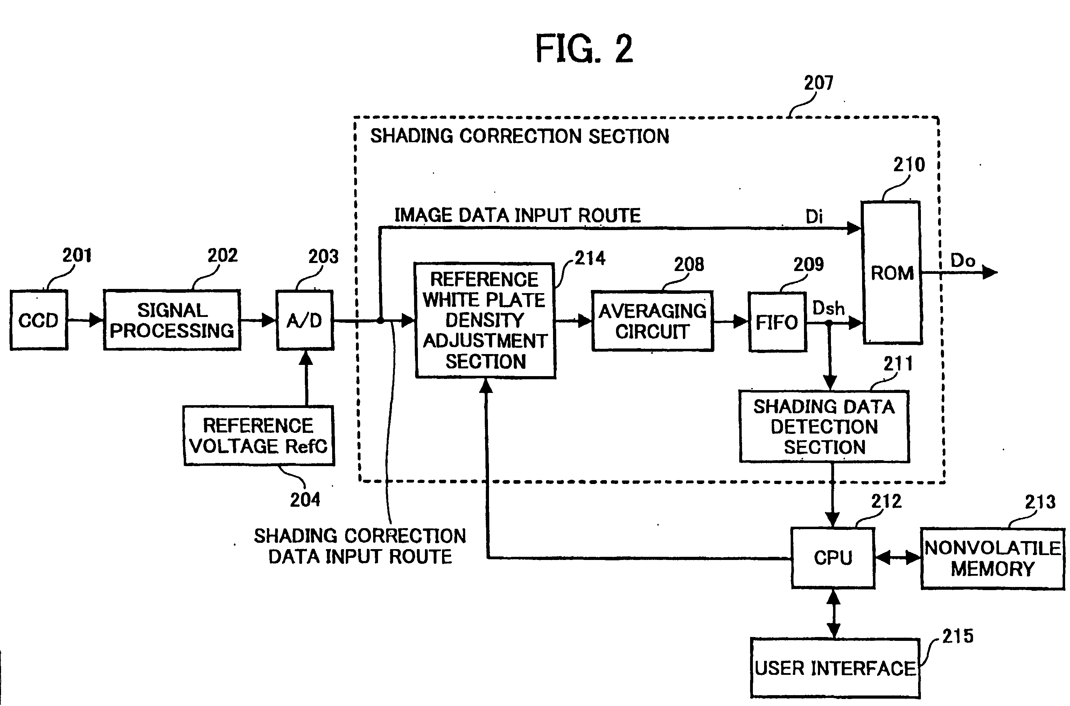

A configuration and operation of a circuit applying improved adjustment and shading correction to image data in the above-described image signal processing section are now described with reference to Fig. 2. The improved adjustment may be performed by adjusting shading data (Dsh_w(n), generally obtained by calculating and averaging outputs of the same order pixels in plural lines) generated from an output of a reference white plate in accordance with a change in a density thereof and used in a correction process such as shading correction where the following calculation is performed, wherein Dout(n) represents image data after receiving the shading correction, Din(n) represents image data read from an original, Dsh(n) represents shading correction data, and (n) represents a prescribed order of a pixel;

$$Dout(n) = (Din(n)/Dsh(n)) \times 255 \text{ (i.e., 8 bit)}$$

In the past, the conventional adjustment system adjusts and alternatively set different reference potentials to the A/D converter respectively when the reference white plate and original are read. Thus, it essentially needs an alternating device for alternating the reference potential (see Fig. 7).

However, this embodiment may realize a simple circuit configuration by adjusting shading data in accordance with a change in a density of the reference white plate without alternating such a reference voltage. For that purpose, both a reference white plate and reference original, which is a reference member defining a readable density limit, may be used when unevenness existing in a reference white plate is to be adjusted so that its output can be normalized. Specifically, a prescribed detection device may be provided so as to detect density adjustment data from the reference white plate. Such detection may be performed by applying exposure to respective reference white plate and reference original under substantially the same illumination condition. In addition, reflected light may be entered into the CCD. A prescribed reference potential may be continuously set to the A/D converter. Then, the A/D converter may convert image signals detected by the CCD. A detection device may calculate a ratio, as density adjustment data (Dadj=Dsh -w(n)/Dsh- std(n)), between both output data (Dsh_w (n) and Dsh_std (n)) output from the A/D converter, wherein Dsh_w (n) represents shading data generated from the reference white plate, and Dsh_std(n) represents shading data generated from the reference original. Also provided may be an adjustment device for adjusting shading correction data (when shading data receives shading correction) in accordance with the density adjustment data by calculating the following formula, wherein Dsh(n)' represents shading correction data after receiving the adjustment;

$$Dsh(n)' = Dsh(n) \times (Dsh\_std/Dsh\_w)$$

Fig. 2 is a block chart for illustrating a basic configuration of an image signal processing section that processes and correct image data in accordance with a change in a density of the reference white plate. In this embodiment, an image processing section may apply shading correction to digital data (i.e., shading data) converted from an analogue image signal read by the CCD image sensor. As illustrated in Fig. 2, the analogue image signal read by the one dimensional line state CCD 201 may receive signal processing from a signal processing circuit 202 such as a wave fairing, sample holding, and amplifying, etc. Then, the analogue image signal may be converted into digital data by the A/D converter 203 and is input to the shading correction circuit 207. The A/D converter 203 may not distinctively utilize a constant reference voltage Refc 204 when the reference white plate and original are read. The shading correction circuit 207 may include a selectively used image data input route and shading correction data (i.e., shading data) input route. The shading correction data input route may include an averaging circuit 208 for averaging shading data of plural lines, for example, in a prescribed manner, and a FIFO (first in first out) 209 for storing the averaged shading data. In addition, a ROM operable in accordance with read data Di and data input from the FIFO 209 may be provided so as to perform shading correction. When the reference white plate is read in order to obtain shading correction data, the shading correction data input route may be selected. Further, when a proper original image is read, read data Di and shading correction data Dsh per a pixel are input to the ROM 210 from the image data input route and the FIFO 209, respectively. A calculating process may then be performed by a look up table system, i.e., using a shading correction calculation formula stored in the ROM 210. Data Do may then be generated and output from the ROM 250 after performing the shading correction calculation in accordance with the values Di and Dsh.

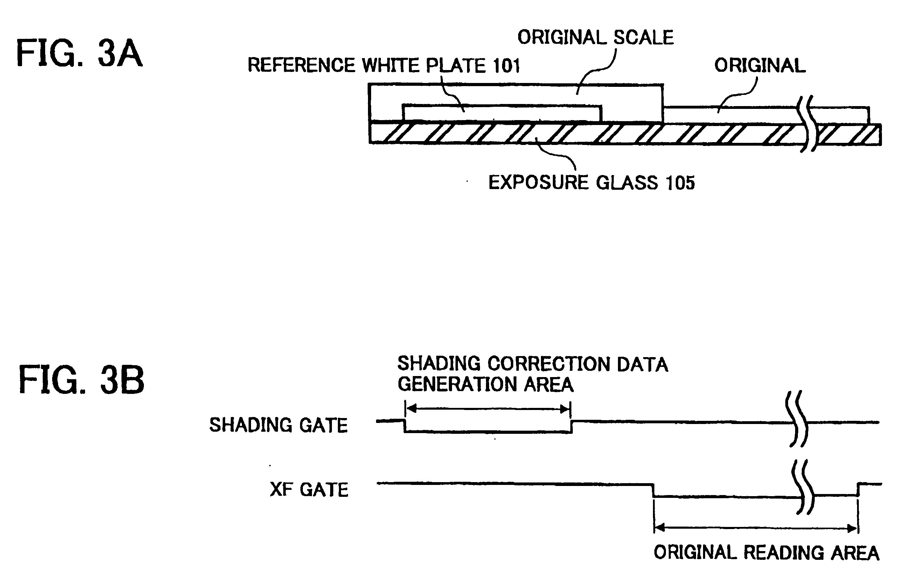

Fig. 3B is a chart for illustrating timings of reading a reference white plate and original image in a sub scanning direction. As illustrated in Fig. 3B, a period when a shading gate is "L" may be set during when the reference white plate is read. The shading correction data input route may be selected during the period. When the shading gate is negated from "L" to "H", shading correction data may be fixed and is then stored in the FIFO 209.

Further, a period when XFGATE is "L" may be set during when an original is read. During the period, original reading data Di from the data input route, and shading correction data Dsh generated per a pixel from the FIFO 209 may be input to the ROM 210. The look up table system may then calculate using the shading correction calculation formula stored in the ROM 210, and thereby generating data "Do" in accordance with Di and Dsh.

One embodiment for adjusting shading data in accordance with a change in a density of a reference white plate is now described with reference to Fig. 2. Detection and adjustment performed in accordance with density adjustment data of the reference white plate are necessary processes in this embodiment. Initially, the density adjustment data may be used when image data is adjusted in accordance with a change in a density of the reference white plate. The density adjustment data may be represented by a ratio of a density of the reference white plate to that of a reference original as a reference member. A detection device for detecting density adjustment data may be formed from a shading data detection section 211 that is formed by branching off from an output terminal of the shading correction data input route. The shading data detection section 211 may detect density data for calculating density adjustment data when both of the reference original and white plate are read. The CPU 21 serving as a controller for controlling the entire image reading apparatus may then calculate a density ratio from both density data obtained by the shading data detection section 211 by reading both of the reference white plate and reference original. The CPU 21 may supervise the density ratio as density adjustment data. Specifically, the CPU 21 may store the density adjustment data in the nonvolatile memory 213. Then, the CPU 21 may set the density adjustment data to a prescribed adjustment section by reading it from the nonvolatile memory 213 so as to perform density adjustment upon need.

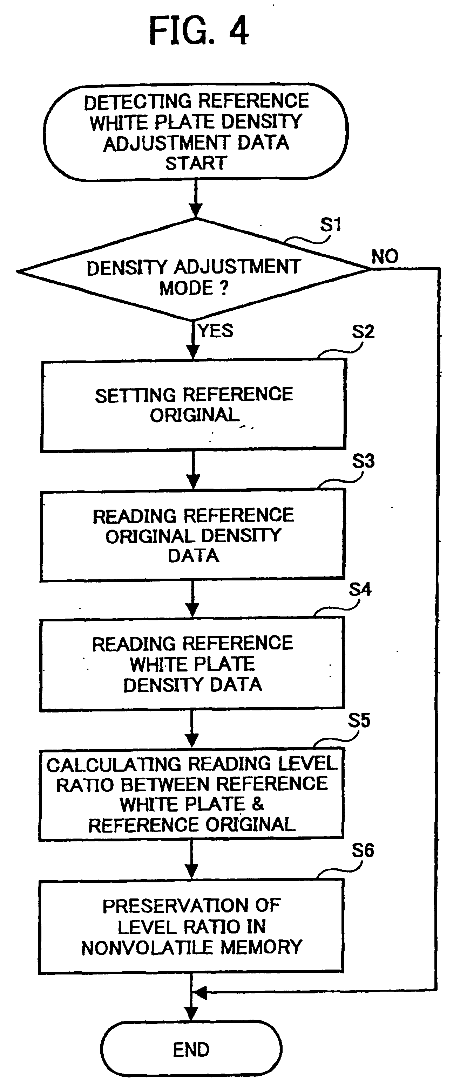

One exemplary timing of starting detection of the above-described density adjustment data is now described with reference to Fig. 4. Since the reference original used when density adjustment data is detected is not always built in an image reading apparatus, the reference original is utilized upon need. Thus, detection may be performed upon instruction from a user or operator such as a service person. For that purpose, the user interface 215 may include a prescribed device for allowing the operator to instruct the image reading apparatus to perform detection through an input operation. Detection of density adjustment data may be started by the instruction of the operator as illustrated in Fig. 4.

Specifically, the CPU 212 may initially start detection of the density adjustment data when recognizing that the operator selects and instructs execution of a density adjustment mode through the operation panel. Thus, as illustrated in Fig. 4, whether it is the density adjustment mode or not may be determined (in step S1). If it is the density adjustment mode, since the reference original is initially to be set and read, it may be determined whether or not the reference original is set on the exposure glass 105 (in step S2). Further, since the operator manually externally sets the reference original, a message may be maintained to be displayed so as to urge the operator to set thereof until the reference original is set. Subsequently, the reference original is read and density data thereof may be detected (in step S3). Simultaneously, the first carriage 103 may be moved to a position where the reference original is set, and the shading gate may be asserted in the reference original section timing, and then shading data may be generated.

A timing of asserting the shading gate at that time may be different from that when the later described reference white plate 101 is read. The shading data can be optionally detected per a pixel for plural lines, and is supplied to an averaging process so as to receive prescribed averaging and obtain density data.

Subsequently, the reference white plate 101 built in the apparatus may be read and density data may be obtained therefrom (in step S4). For that purpose, the first carriage 103 may be moved below the reference white plate 101. The shading gate may simultaneously be asserted (see Fig. 3B). Shading data may then be generated. A procedure performed when a shading data detection section 211 detects shading data may be similar to that performed when the above-described reference original is detected. After that, the CPU 212 may apply an averaging process or the like to the shading data detected by the shading data detection section 211 so as to average the shading data in a prescribed manner. The CPU 212 may then calculate a ratio of a density level of the reference original to that of the reference white plate vice versa (in step S5). Since the density of the reference original gives reference data for adjusting density unevenness caused in the reference white plate, and that of the reference white plate 101 represents density unevenness, the later may be different from the density data of the reference original, for example, in accordance with time elapsing. Then, density adjustment can be performed using the ratio. Further, such density adjustment data is not detected and used util the operator instructs next. Accordingly, the density adjustment data should be preserved. Since density adjustment data detection is not necessarily to be executed every when an electric power source is turned ON, it may be preserved in the nonvolatile memory 213 and is read and utilized therefrom at the time. Specifically, density adjustment data detected and calculated may be preserved in the nonvolatile memory 213 (in step S6) as illustrated in Fig. 4. The procedure (flow) may then be terminated.

Adjustment can be applied to either data read from the reference white plate or image data read from an original in accordance with the above-described density adjustment data. Initially, one example of an adjustment process performed by the circuit of Fig. 2 when the reference white plate is read and shading data is generated therefrom may be described. Specifically, a white plate density adjustment section 214 may be disposed on the shading correction data input route. The CPU 212 may set the density adjustment data previously obtained to the white plate density adjustment section 214. Then, adjustment may be performed in accordance with the set adjustment data. Specifically, data read from the reference white plate may be adjusted by the white plate density adjustment section 214 in the preliminary step to the shading data generation. For example, the reference white plate density adjustment section 214 may apply any one of multiplication and division, (addition and subtraction is also suitable for the approximate calculation) to shading data in accordance with density adjustment data in a prescribed manner. Thus, deviation caused by unevenness of density of the reference white plate in the shading data may be adjusted before the shading correction data is generated therefrom. Accordingly, shading correction data input and averaged by the averaging circuit 208 may be normalized.

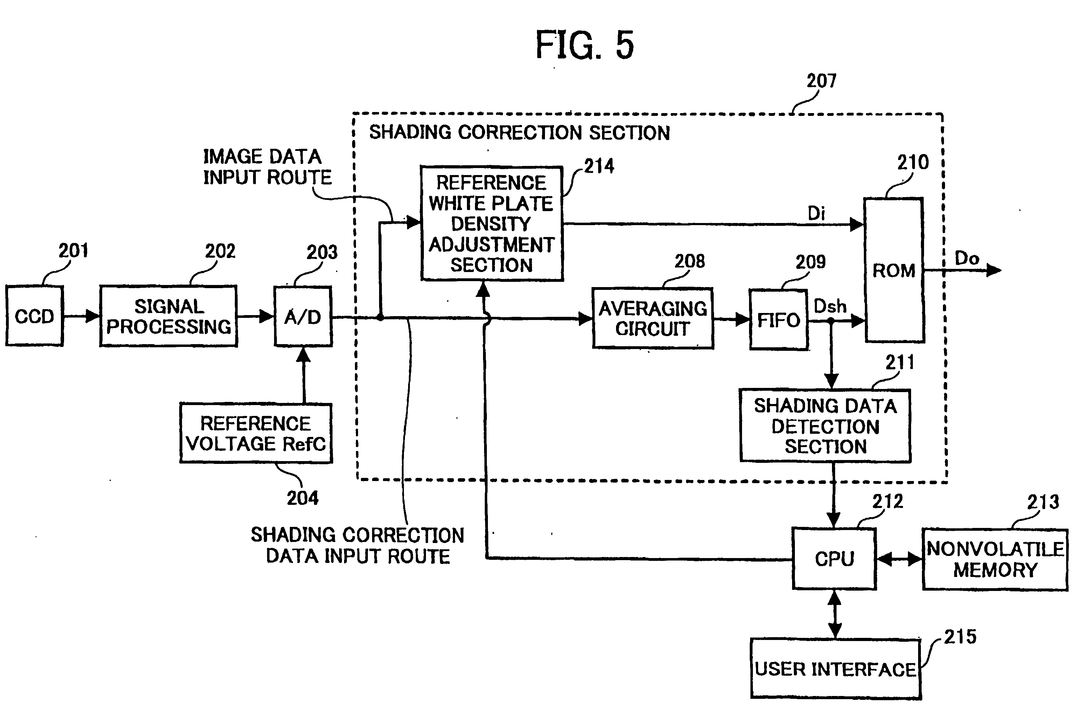

One embodiment that adjusts image data obtained from an original image is now described with reference to Fig. 5. A circuit of Fig. 5 may realize this embodiment. Specifically, a reference white plate adjustment section 214 may be employed on the image data input route as a part of a processing device for processing image data. The CPU 212 may set density adjustment data previously calculated to the reference white plate adj ustment section 214.

Then, such density adjustment may be performed in accordance with the adjustment data as illustrated in the drawing. When original image data is adjusted, reciprocal (Dsh_w/Dsh_std) of the ratio [utilized for] shading correction data may be used. Because, the adjustment can be represented by the following formula, wherein Din(n)' represents adjusted data that is read from an original:

$$Din(n)' = Din(n) \times (Dsh\_w/Dsh\_std)$$

However, this embodiment may basically be not different from that of Fig. 2 except for a location of the reference white plate adjustment section 214 that adjusts image data in accordance with the density adjustment data. Specifically, a configuration of the detection section described with reference to Figs. 2 to 4 may be converted to this embodiment. Thus, description about detection of the density adjustment data is not repeated. Similar to the above-described embodiment, original image data read and input may be adjusted in accordance with the adjustment data. The reference white plate density adjustment section 214 may apply multiplication or division (addition and subtraction is also suitable for approximate calculation) to the image data in accordance with the density adjustment data set thereto. Thus, image data may be input to the ROM 210 with it deviation caused by reference white plate density unevenness, for example, being adjusted. Then, shading correction may be performed therein. Thereby, an output to the utility instrument may be corrected. The exemplary reference white plate adjustment section 214 is disposed in an input stage on the image data input route of the embodiment of Fig. 5. However, the reference white plate adjustment section can be disposed in an output stage, namely an output side of the ROM 210.

In the above-described embodiment, any one of multiplication, division, addition, and subtraction perform the adjustment calculation using the density adjustment data. The multiplication and division may be performed by a conventional coefficient calculation, thereby giving more correct resultant. In contrast, addition and subtraction (i.e., Dsh(n)' = Dsh (n) + (Dsh_std - Dsh_w)) may be preferably performed if a shading correction data distribution is almost uniform where no problem occurs if multiplication and division having complex and large process load are replaced therewith. As a result, shading correction precision may be not so impaired, and a circuit configuration may be simplified.

One embodiment of checking abnormality of density adjustment data is now described. When density adjustment data is detected and does not fall within a prescribed range previously set as an allowable limit, (for example, when unevenness of density of the reference white plate ranges +-10 %, the adjustment value should be from about 0,9 to about 1.1), the unevenness indicates outside the range thereof, it may likely come from hardware abnormality. In such a situation, the CPU 212 may have a function of comparing the density adjustment value with the prescribed allowable range so that density adjustment value detection error can be checked, and determining if it deviates from the range. Further, by determining detection error of the adjustment value, and displaying abnormality on an operation panel of a user interface, the CPU 212 may inform an operator of the abnormality, so that the operator can take an appropriate countermeasure against the error and prevent from reading error.

Further, the above-described several embodiments rely upon adjustment performed by the apparatus side. However, the below-described embodiment may neglect the apparatus side adjustment. Specifically, image data may be adjusted in accordance with a designated value by an operator. Specifically, this embodiment may further include a prescribed manual setting device capable of reflecting intent of the operator to output data. Namely, the prescribed manual setting device may be provided so as to allow an operator to optional set density adjustment data, which is set to the reference white plate density adjustment section 214 by the CPU 212, through the input operation panel of the user interface 215 in a manual setting mode. By furnishing such a prescribed device, appropriate data read from a particular original and operator desired data may be obtained.

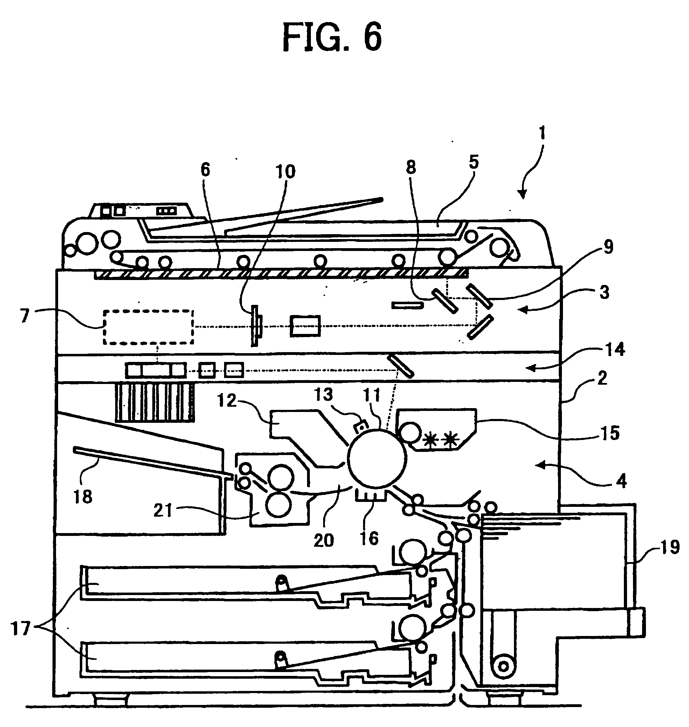

One embodiment of an image forming apparatus employing the above-described image reading apparatus and an image formation device for forming an image in accordance with image data output from the image reading apparatus is now described with reference to Fig. 6. This embodiment may include a DPPC (a digital Plane Paper Copier i.e., a digital copier) to which the present invention is applied. Fig. 6 illustrates a schematic view of the entire configuration of the DPPC. As illustrated in Fig. 6, an apparatus body 2 of the DPPC 1 may include a scanner section 3 similar to that of Fig. 1 as an image reading apparatus and a printer section 4 as an image duplicating device.

An ADF (Automatic Document Feeder) unit serving as a document transportation mechanism may be engaged with the scanner section 3. The scanner section 3 may include an exposure glass 6 similar to that 105 of Fig. 1 and a first mirror 8 disposed oppositely to an original surface via the exposure glass for perpendicularly deflecting a light reflected from an original. Also included may be a second mirror 9 for returning a reflection light path from the first mirror 8. In addition, a CCD line image sensor 10 may be arranged on the reflection light path originated from the second mirror 9 so as to apply photoelectric transfer to an image transmitted through an imaging lens. The CCD sensor 10 may convert an imaged image into an image signal while sensor elements perform main scanning in a line direction (i.e., a vertical direction to a surface of Fig. 6). In addition, the scanner section may read a reference white plate similar to that 101 of Fig. 1 together with the original. The reference white plate may be arranged in substantially the same level so as to enable the scanner to equally read the reference white plate and original surface. Data read from the reference white plate may be utilized for generating shading data for processing image data read from the original.

Image data read by the CCD sensor 10 may be input to a control section 7 serving as a processing device of image data. The control section 7 may apply the A/D conversion to image data, and apply digital processing such as correction, adjustment, etc., to the digital signal. The control section 7 may then output the image data to an optical writing section 14 including a laser light output apparatus, which modulates an optical output of a laser diode or the like in accordance with the image data, and a polygon mirror. The printer section 4 may include a photoconductive drum 11. Also provided may be a toner cleaner 12, a charger 13, a developing device 15, a transfer device 16, respectively arranged around and opposing to the PC drum one by one. The charger 13 may discharge the PC drum 11 arranged in the printer section 4. A laser light carrying image information may be irradiated to the PC drum 11 from the writing section 14. Thereby, a latent image may be formed on the surface of the PC drum 11. The developing device 15 stores and adhere toner to the surface of the PC drum 11 carrying the latent image, thereby visualizing the latent image as a toner image. A sheet feeding section may include a large capacity sheet tray 19 and cassettes 17 accommodating various sized small numbers of sheets. A sheet transportation mechanism may also be provided so as to sequentially transport printing sheets from these cassettes toward a sheet ejection tray 18. A sheet transportation path 20 may be provided extending from a gap formed between the PC drum 11 and transfer device 16 to an interior of a fixing device 21. The transfer device 16 may transfer a toner image formed on the PC drum onto the printing sheet transported by the sheet transportation mechanism. The printing sheet carrying the transferred toner image may be further transported by the sheet transportation mechanism to the fixing device 21. Then, the toner image may be fixed into the printing sheet. The printing sheet may then be ejected onto the sheet ejection tray 18. Further, an operation panel (not shown) may be arranged on the upper surface of the apparatus body 2 so as to allow and display various data input

Obviously, numerous additional modifications and variations of the present invention are possible in light of the above teachings. It is therefore to be understood that within the scope of the appended claims, the present invention may be practiced otherwise than as specifically described herein.

## Claims

1.  An image reading apparatus (1), comprising:

    an image sensor (201);
    an A/D converter (203) configured to convert the image signal into a digital signal with reference to a reference voltage (204);
    a reference white plate (101) configured to be read to generate density data;
    a correction device (207) configured to correct the digital signal in accordance with shading data;
    a reference member configured to define a readable density limit;
    a detection device (211) configured to detect a ratio of density of the reference white plate (101) to that of the reference member as a density adjustment data, said density being obtained by reading the respective reference member and reference white plate (101) in substantially the same exposure condition; and
    a control device (212) configured to control the correction device (207) to adjust the digital signal in accordance with the density adjustment data;

        **characterized by**:

    a determining device (212) configured to determine abnormality of the reference white plate (101), said abnormality being detected when the density adjustment data is larger than a prescribed value.

2.  The image reading apparatus according to claim 1, further comprising a nonvolatile memory configured to store the density adjustment data.

3.  The image reading apparatus according to any one of claims 1 and 2, wherein said correction device adjusts shading data in accordance with density adjustment data and performs shading correction.

4.  The image reading apparatus according to any one of claims 1 and 2, wherein said correction device performs shading correction and adjusts image data obtained from an original before or after shading correction in accordance with density adjustment data.

5.  The image reading apparatus according to any one of claims 3 and 4, wherein said adjustment is performed by a multiplication and division circuit.

6.  The image reading apparatus according to any one of claims 3 and 4, wherein said adjustment is performed by an addition and subtraction circuit.

7.  The image reading apparatus according to any one of claims 1 to 6, further comprising:

    a user interface; and
    a detection mode starting device configured to start a detection mode, said detection mode detecting the density adjustment data through an operation of the user interface.

8.  The image reading apparatus according to claim 1, further comprising a display configured to display a result of the determination of abnormality on the user interface.

9.  The image reading apparatus according to any one of claims 1 to 8, wherein density adjustment data is manually set by means of the user interface.

10. An image forming system, comprising:

    an image reading apparatus as claimed in any one of claims 1 to 9; and
    an image formation apparatus configured to form an image in accordance with an output of the image reading apparatus.

## Patentansprüche

1.  Bildlesevorrichtung (1), die Folgendes aufweist:

    einen Bildsensor (201);
    einen A/D-Wandler, der konfiguriert bzw. gestaltet ist, um das Bildsignal in ein Digitalsignal umzuwandeln, mit Bezug auf eine Referenzspannung (204);
    eine weiße Referenzplatte bzw. ein Referenzweißblech (101), die bzw. das konfiguriert bzw. gestaltet ist, um gelesen zu werden, um Dichtedaten zu erzeugen;
    eine Korrektureinrichtung (207), die konfiguriert bzw. gestaltet ist, um das Digitalsignal in Übereinstimmung mit Schattierungs- bzw. Dunkeltönungsdaten zu korrigieren;
    ein Referenzglied, das konfiguriert bzw. gestaltet ist, um eine bzw. einen lesbaren Dichtebeschränkung bzw. Dichtegrenzwert zu definieren;
    eine Detektionseinrichtung (211), die konfiguriert bzw. gestaltet ist, um ein Verhältnis der Dichte der weißen Referenzplatte bzw. Referenzweißblech (101) zu der des Referenzgliedes als Dichteeinstellungsdaten zu detektieren, wobei die Dichte durch Lesen des jeweiligen Referenzgliedes und der weißen Referenzplatte bzw. Referenzweißblech (101) bei im Wesentlichen demselben Belichtungszustand erlangt wird; und
eine Steuereinrichtung (212), die konfiguriert bzw. gestaltet ist, um die Korrektureinrichtung (207) zu steuern, um das Digitalsignal in Übereinstimmung mit den Dichteeinstellungsdaten einzustellen;

**gekennzeichnet durch** eine Bestimmungseinrichtung (212), die konfiguriert bzw. gestaltet ist, um eine Unregelmäßigkeit der weißen Referenzplatte bzw. Referenzweißblech (101) zu bestimmen, wobei die Unregelmäßigkeit detektiert wird, wenn die Dichteeinstellungsdaten größer als ein vorgeschriebener Wert sind.

2. Bildlesevorrichtung gemäß Anspruch 1, die ferner einen nichtflüchtigen Speicher aufweist, der konfiguriert bzw. gestaltet ist, um die Dichteeinstellungdaten zu speichern.

3. Bildlesevorrichtung gemäß irgendeinem der Ansprüche 1 und 2, wobei die Korrektureinrichtung Schattierungs- bzw. Dunkeltönungsdaten in Übereinstimmung mit Dichteeinstellungsdaten einstellt und Schattierungs- bzw. Dunkeltönungskorrektur ausführt.

4. Bildlesevorrichtung gemäß irgendeinem der Ansprüche 1 und 2, wobei die Korrektureinrichtung Schattierungs- bzw. Dunkeltönungskorrektur ausführt und Bilddaten einstellt, die von einem Original erlangt wurden, und zwar vor oder nach Schattierungs- bzw. Dunkeltönungskorrektur in Übereinstimmung mit Dichteeinstellungsdaten.

5. Bildlesevorrichtung gemäß irgendeinem der Ansprüche 3 und 4, wobei die Einstellung durch einen Multiplikations- und Divisionsschaltkreis ausgeführt wird.

6. Bildlesevorrichtung gemäß irgendeinem der Ansprüche 3 und 4, wobei die Einstellung durch einen Additions- und Subtraktionsschaltkreis ausgeführt wird.

7. Bildlesevorrichtung gemäß irgendeinem der Ansprüche 1 bis 6, die ferner aufweist:

eine Benutzerschnittstelle; und
eine Detektionsmodusstarteinrichtung, die konfiguriert bzw. gestaltet ist, um einen Detektionsmodus zu starten, wobei der Detektionsmodus die Dichteeinstellungsdaten durch eine Betätigung bzw. Funktion der Benutzerschnittstelle detektiert.

8. Bildlesevorrichtung gemäß Anspruch 1, die ferner eine Anzeigeeinrichtung aufweist, die konfiguriert bzw. gestaltet ist, um ein Ergebnis der Bestimmung der Unregelmäßigkeit an der Benutzerschnittstelle anzuzeigen.

9. Bildlesevorrichtung gemäß irgendeinem der Ansprüche 1 bis 8, wobei Dichteeinstellungsdaten manuell durch Einrichtungen der Benutzerschnittstelle eingestellt werden.

10. Bilderzeugungssystem, das Folgendes aufweist:

eine Bildlesevorrichtung, wie in irgendeinem der Ansprüche 1 bis 9 beansprucht; und
eine Bilderzeugungsvorrichtung, die konfiguriert bzw. gestaltet ist, um ein Bild in Übereinstimmung mit einer Ausgabe bzw. Output der Bildlesevorrichtung zu bilden.

**Revendications**

1. Appareil (1) de lecture d'images, comprenant :

un capteur d'images (201) ;
un convertisseur analogique-numérique (203), configuré pour convertir le signal d'image en un signal numérique en relation avec une tension de référence (204) ;
une plaque blanche de référence (101), configurée pour être lue de manière à produire des données de densité ;
un dispositif de correction (207), configuré pour corriger le signal numérique en fonction de données d'ombre ;
un élément de référence, configuré pour définir une limite de densité lisible ;
un dispositif de détection (211), configuré pour détecter le rapport de la densité de la plaque blanche de référence (101) à celle de l'élément de référence en tant que données d'ajustement de densité, ladite densité s'obtenant par lecture respective de l'élément de référence et de la plaque blanche de référence (101) dans des conditions d'exposition sensiblement identiques ; et
un dispositif de commande (212), configuré pour commander le dispositif de correction (207) afin d'ajuster le signal numérique en fonction des données d'ajustement de densité ;

**caractérisé par** :

un dispositif de détermination (212), configuré pour déterminer l'état d'anormalité de la plaque blanche de référence (101), ledit état d'anormalité étant détecté lorsque les données d'ajustement de densité sont plus grandes qu'une valeur prescrite.

2. Appareil de lecture d'images selon la revendication 1, comprenant en outre une mémoire rémanente, configurée pour stocker les données d'ajustement de densité.

3. Appareil de lecture d'images selon la revendication 1 ou 2, où ledit dispositif de correction ajuste les données d'effet d'ombre en fonction des données d'ajustement de densité et effectue une correction de l'effet d'ombre.

4. Appareil de lecture d'images selon la revendication 1 ou 2, où ledit dispositif de correction effectue une correction de l'effet d'ombre et ajuste les données d'image obtenues à partir d'un original avant ou après la correction de l'effet d'ombre en fonction des données d'ajustement de densité.

5. Appareil de lecture d'images selon la revendication 3 ou 4, où ledit ajustement est effectué par un circuit de multiplication et de division.

6. Appareil de lecture d'image selon la revendication 3 ou 4, où ledit ajustement est effectué par un circuit d'addition et de soustraction.

7. Appareil de lecture d'images selon l'une quelconque des revendications 1 à 6, comprenant en outre :

   une interface d'utilisateur ; et
   un dispositif de démarrage de mode de détection, configuré pour faire démarrer un mode de détection, ledit mode de détection détectant les données d'ajustement de densité via l'adivation de l'interface d'utilisateur.

8. Appareil de lecture d'images selon la revendication 1, comprenant en outre un dispositif d'affichage configuré pour afficher le résultat de la détermination de l'état d'anormalité sur l'intértacé d'utilisateur.

9. Appareil de lecture d'images selon l'une quelconque des revendications 1 à 8, où lesdites données d'ajustement de densité sont fixées manuellement par l'intermédiaire de l'interface d'utilisateur.

10. Système de formation d'images, comprenant :

    un appareil de lecture d'images tel que défini dans l'une quelconque des revendications 1 à 9 ; et

un appareil de formation d'images configuré pour former une image en fonction du signal de sortie de l'appareil de lecture d'images.

EP 1 280 334 B1

# FIG. 1

# FIG. 2

SHADING CORRECTION SECTION — 207

IMAGE DATA INPUT ROUTE — Di

201 CCD → 202 SIGNAL PROCESSING → 203 A/D

204 REFERENCE VOLTAGE RefC

214 REFERENCE WHITE PLATE DENSITY ADJUSTMENT SECTION → 208 AVERAGING CIRCUIT → 209 FIFO — Dsh → 210 ROM → Do

211 SHADING DATA DETECTION SECTION

SHADING CORRECTION DATA INPUT ROUTE

212 CPU ↔ 213 NONVOLATILE MEMORY

215 USER INTERFACE

EP 1 280 334 B1

# FIG. 3A

REFERENCE WHITE PLATE 101

ORIGINAL SCALE

ORIGINAL

EXPOSURE GLASS 105

# FIG. 3B

SHADING CORRECTION DATA
GENERATION AREA

SHADING GATE

XF GATE

ORIGINAL READING AREA

EP 1 280 334 B1

# FIG. 4

```
        ┌─────────────────────────┐
        │  DETECTING REFERENCE    │
        │  WHITE PLATE DENSITY    │
        │  ADJUSTMENT DATA        │
        │  START                  │
        └───────────┬─────────────┘
                    │
                    ▼                        S1
            ◇ DENSITY ADJUSTMENT ◇ ──── NO ──┐
            ◇     MODE ?         ◇            │
                    │ YES                     │
                    ▼           S2            │
        ┌─────────────────────────┐          │
        │  SETTING REFERENCE      │          │
        │  ORIGINAL               │          │
        └───────────┬─────────────┘          │
                    ▼           S3            │
        ┌─────────────────────────┐          │
        │  READING REFERENCE      │          │
        │  ORIGINAL DENSITY       │          │
        │  DATA                   │          │
        └───────────┬─────────────┘          │
                    ▼           S4            │
        ┌─────────────────────────┐          │
        │  READING REFERENCE      │          │
        │  WHITE PLATE            │          │
        │  DENSITY DATA           │          │
        └───────────┬─────────────┘          │
                    ▼           S5            │
        ┌─────────────────────────┐          │
        │ CALCULATING READING     │          │
        │ LEVEL RATIO BETWEEN     │          │
        │ REFERENCE WHITE PLATE & │          │
        │ REFERENCE ORIGINAL      │          │
        └───────────┬─────────────┘          │
                    ▼           S6            │
        ┌─────────────────────────┐          │
        │  PRESERVATION OF        │          │
        │  LEVEL RATIO IN         │          │
        │  NONVOLATILE MEMORY     │          │
        └───────────┬─────────────┘          │
                    ▼◄───────────────────────┘
               ┌──────────┐
               │   END    │
               └──────────┘
```

# FIG. 5

**207** SHADING CORRECTION SECTION

IMAGE DATA INPUT ROUTE

**201** CCD → **202** SIGNAL PROCESSING → **203** A/D → 

**204** REFERENCE VOLTAGE RefC

**214** REFERENCE WHITE PLATE DENSITY ADJUSTMENT SECTION → Di

**208** AVERAGING CIRCUIT → **209** FIFO → Dsh

**210** ROM → Do

**211** SHADING DATA DETECTION SECTION

SHADING CORRECTION DATA INPUT ROUTE

**212** CPU ↔ **213** NONVOLATILE MEMORY

**215** USER INTERFACE

EP 1 280 334 B1

# FIG. 6

# FIG. 7

EP 1 280 334 B1